# EUROPEAN PATENT SPECIFICATION

(11) **EP 2 348 823 B1**
(45) Date of publication and mention of the grant of the patent: **20.01.2021**
(21) Application number: 09829373.1
(22) Date of filing: 03.11.2009
(51) Int. Cl.: A01K 1/12, A01J 5/003

(54) **ROTARY PLATFORMS**
ROTIERENDE PLATTFORMEN
PLATES-FORMES ROTATIVES

(30) Priority: 03.11.2008 NZ 57253408
(43) Date of publication of application: 03.08.2011
(73) Proprietor: Waikato Milking Systems LP, Hamilton (NZ)
(72) Inventor: JANMAAT, Joshua Wayne, Morrinsville 3300 (NZ); BATES, Michael David, Auckland 2120 (NZ)
(74) Representative: Boult Wade Tennant LLP
(86) International application number: PCT/NZ2009/000235
(87) International publication number: WO 2010/062192

(56) References cited:
- AU-B2- 569 028
- US-A- 3 709 196
- US-A- 4 229 497
- US-A- 5 782 738
- US-B1- 6 189 288
- US-B1- 6 189 288
- US-B1- 6 544 624

## Description

The present invention relates to milking platforms, components thereof, related facilities and uses.

Milking platforms of rotary milking facilities tend to be metal platforms or concrete topped metal platforms. They may run about a central pivot or be tracked, or both.

The present invention recognizes that speed of erection can be obtained by providing moulded components (particularly of a composite material) for use in the erection of the platform of a milking facility. This is particularly so where each moulded component, to form part of a substantially annular platform, defines a plural sequence of bail floors or parts thereof.

US6,189,288 (Bowers) relates to a method of construction of annular platforms for milking sheds. The platforms are formed from reinforced concrete.

The present invention also, or in addition, sees an advantage from being able to provide componentary of a platform able to be assembled onto a sub-frame and/or to each other and/or so as to relate to each other as a substantially continuous annulus.

The present invention also, or in addition, sees an advantage in the use of light weight componentary able to be readily transported (e.g. in a typical shipping container) yet able to be speedily assembled to provide a long service life rotary milking platform.

It is also in accordance with certain aspect of the present invention considered desirable to provide a "feel" providing surface for milking animals of a floor formed from modular components (for example of composite materials able to be moulded to a shape), the feel being provided by (1) attached and/or inlaid resilient material(s) and/or (2) fully or partly embedded filler or core material(s).

It is an object of the present invention to provide an alternative to the primarily steel and/ or steel and concrete rotary milking platforms.

It is a further, object of the present invention to provide a rotary milking platform, moulded modules ( involving composite material(s))useful when assembled in defining a rotary milking platform on a sub-frame, a milking facility having moulded floor defining components (preferably involving composite material(s)) and related methods and procedures.

The present invention provides a rotary milking platform as set out in claim 1.

Described below is a rotary milking platform having a bail floor, or at least part of its floor and/or sub-floor if matted, formed at least in part from a composite material.

According to the invention, the the platform is at least in part of moulded components. Each such moulded component is a module. Each module is totally or at least in part of the composite material.

According to the invention, the composite material is fibre reinforced resin based system.

Preferably the composite material(s) include, as an inlay or an imbedded core, another material (eg, a foam or filler).

Preferably each module is to define at least part of the floor and/or mat support for a plurality of bails.

Preferably each module is provided with an inner and outer curved or facetted periphery (preferably circular or a continuous curve) and/ or preferably the end peripheries are substantially radially aligned with respect to the axis of rotation of the to be defined rotary milking platforms.

Also described is a rotary milking platform having a rotatable sub-floor frame and an at least in part composite material floor or floor defining assembly carried thereby.

Preferably the platform is at least in part of moulded components.

Preferably each such moulded component is a module.

Preferably each module is totally or at least in part of the composite material.

Preferably the composite material is fibreglass or other fibre reinforced plastics and/ or polymeric and/or resin based system.

Preferably the composite material(s) include, as an inlay or an imbedded core, another material (eg, a foam or filler).

Preferably each module is to define at least part of the floor and/or mat support for a plurality of bails.

Preferably each module is provided with an inner and outer curved or facetted periphery (preferably circular or a continuous curve) and/or preferably the end peripheries are substantially radially aligned with respect to the axis of rotation of the to be defined rotary milking platforms.

Also described is a milking facility that includes a walk-on/ back-off entrance /exit arrangement to bails defined on a rotatable platform where the floor of the platform, optionally at least in part matted, is at least in part of a composite material.

Preferably the platform is at least in part of moulded components.

Preferably each such moulded component is a module.

Preferably the composite material(s) include, as an inlay or an imbedded core, another material (eg, a foam or filler).

Preferably each module is to define at least part of the floor and/or mat support for a plurality of bails.

Preferably each module is totally or at least in part of the composite material.

Preferably the composite material is fibreglass or other fibre reinforced plastics and/or polymeric and/or resin based system.

Preferably the composite material(s) include, as an inlay or an imbedded core, another material (eg, a foam or filler).

Preferably each module is to define at least part of the floor and/or mat support for a plurality of bails.

Preferably each module is provided with an inner and outer curved or facetted periphery (preferably circular or a continuous curve) and/or preferably the end peripheries are substantially radially aligned with respect to the axis of rotation of the to be defined rotary milking platforms.

Also described is a rotary milking platform having a rotatable sub-floor frame and a composite material including floor carried thereby at least in part matted with a resilient material.

Preferably the platform is of moulded components. Preferably each such moulded component is a module.

Preferably each module is totally or at least in part of the composite material.

Preferably the composite material is fibreglass or other fibre reinforced plastics and/or polymeric and/or resin based system.

Preferably the composite materials) include as an inlay or an imbedded core another material (eg, a foam or filler).

Preferably each module is to define at least part of the floor and/or mat support for a plurality of bails.

Preferably each module is provided with an inner and outer curved or facetted periphery (preferably circular or a continuous curve) and/ or preferably the end peripheries are substantially radially aligned with respect to the axis of rotation of the to be defined rotary milking platforms.

Also described is a milking facility that includes a walk-on/ back-off entrance /exit arrangement to bails defined on a rotatable platform at least where the floor of the platform is at least in part of a composite material (optionally cored by another material), or is an assemblage of mouldings at least in part of a composite material (optionally cored by another material), each bail being matted by one or more resilient inlay.

Preferably the platform is of moulded components. Preferably each such moulded component is a module.

Preferably each module is totally or at least in part of the composite material.

Preferably the composite material is fibreglass or other fibre reinforced plastics and/or polymeric and/or resin based system.

Preferably the composite materials) include as an inlay or an imbedded core another material (eg, a foam or filler).

Preferably each module is to define at least part of the floor and/or mat support for a plurality of bails.

Preferably each module is provided with an inner and outer curved or facetted periphery (preferably circular or a continuous curve) and/or preferably the end peripheries are substantially radially aligned with respect to the axis of rotation of the to be defined rotary milking platforms.

Also described is a moulded module able to be associated with others on a rotatable support to define a rotary milking platform, the module being moulded at least in part in a composite material.

Preferably the composite material(s) include as an inky or an imbedded core another material (eg, a foam or filler). Preferably each module is to define at least part of the floor and/or mat support for a plurality of bails.

Preferably each module is provided with an inner and outer curved or facetted periphery (preferably circular or a continuous curve) and/or preferably the end peripheries are substantially radially aligned with respect to the axis of rotation of the to be defined rotary milking platforms.

Also described is a moulded module able to be associated with others on a rotatable support to define a rotary milking platform, the module being moulded at least in part in a composite material and including one or more resilient material mats.

Preferably the composite materials) include as an inlay or an imbedded core another material (eg, a foam or filler).

Preferably each module is to define at least part of the floor and/or mat support for a plurality of bails.

Preferably each module is provided with an inner and outer curved or facetted periphery (preferably circular or a continuous curve) and/or preferably the end peripheries are substantially radially aligned with respect to the axis of rotation of the to be defined rotary milking platforms.

Also described is a module for use as part of a milking platform, a rotary milking platform having such a module and/or a milking facility having such a platform with such modules;
wherein each module defining one or more bail floor area (whether post mould matted, or not, or whether in mould matted, or not) has been manufactured in a mould by resin infusion about a filling material (eg, a foam plastics material) about at least part of which there has been positioned in mould the fibres to be embedded in the resin.

Preferably each module defines part of an annulus having plural bail floors defined.

Preferably the resin infusion defines a depressed region to be post mould matted.

Preferably the mouldings have any one or more of the characteristics herein described with or without reference to any one or more of the accompanying drawings.

Also described is a rotary milking platform having an annular platform floor (each bail being or to be optionally matted fully or in part) defined by an assembly of moulded floor defining components of composite material, each defining part of, or all of, one or more bail floors.

Also described is a rotary milking platform having an annular platform floor (optionally each bail being or to be optionally matted fully or in part) defined by an assembly of moulded floor defining components, each defining part of, or all of, one or more bail floors.

According to the invention, each component is resin infusion moulded about at least one core to provide an exoskeleton of a composite material.

Also described is a rotary milking platform having an annular platform floor, each bail being or to be matted fully or in part, the floor or sub floor being defined by an assembly of moulded floor defining components, each defining part of, or all of, one or more bail floors.

According to the invention, each moulded component is at least in part (and preferably wholly) provided with a composite material surround (eg, as if an exoskeletal surface providing surround about a core providing material). The moulding is by a process of infusion moulding with a composite system (eg, a resin system without fibre or a resin system including fibre) into cavities about one or more core providing material (eg, a foam, a blow moulded moulded foam, an expanded form or the like), optionally, but preferably, in conjunction with in mould position fibres resulting in the moulding that is at least in part of composite material(s).

Also described is a rotary milking platform having a plurality of supported composite material mouldings defining at least substantially an annular floor supported by a rotatable substrate.

Preferably each moulded component is at least in part (and preferably wholly) provided with a composite material surround (eg, as if an exoskeletal surface providing surround about a filler or core providing material). Most preferably the moulding is by a process of infusion moulding with a composite system (eg, a resin system without fibre or a resin system including fibre) into cavities about one or more filler or core providing material (eg, a foam, a blow moulded foam, an expanded form or the like), optionally, but preferably, in conjunction with in mould position fibres resulting in the moulding that is at least in part of composite material(s).

Also described is a rotary milking platform having an annular platform floor defined by an assembly of moulded floor defining components, each defining part of, or all of, one or more bail floors, each bail being matted with a resilient material. Preferably each moulded component is at least in part (and preferably wholly) provided with a composite material surround (eg, as if an exoskeletal surface providing surround about a filler or core providing material). Most preferably the moulding is by a process of infusion moulding with a composite system (eg, a resin system without fibre or a resin system including fibre) into cavities about one or more filler or core providing material (eg, a foam, a blow moulded foam, an expanded form or the like), optionally, but preferably, in conjunction with in mould position fibres resulting in the moulding that is at least in part of composite material(s).

Also described is a rotary milking platform having an annular platform floor (matted fully or in part) defined by an assembly or juxtapositioning of moulded floor defining components, each defining part of, or all of, one or more bail floors, each bail being matted by one or more resilient matting inlay.

Preferably each moulded component is at least in part (and preferably wholly) provided with a composite material surround (eg, as if an exoskeletal surface providing surround about a filler or core providing material). Most preferably the moulding is by a process of infusion moulding with a composite system (eg, a resin system without fibre or a resin system including fibre) into cavities about one or more filler or core providing material (eg, a foam, a blow moulded foam, an expanded form or the Like), optionally, but preferably, in conjunction with in mould position fibres resulting in the moulding that is at least in part of composite material(s).

Also described is a rotary milking platform having an annular platform floor (optionally matted fully or in part) defined by an assembly of moulded floor defining components, each defining part of, or all of, one or more bail floors, the bail floors being radially aligned.

Preferably each moulded component is at least in part (and preferably wholly) provided with a composite material surround (eg, as if an exoskeletal surface providing surround about a filler or core providing material). Most preferably the moulding is by a process of infusion moulding with a composite system (eg, a resin system without fibre or a resin system including fibre) into cavities about one or more filler or core providing material (eg, a foam, a blow moulded foam, an expanded form or the like), optionally, but preferably, in conjunction with in mould position fibres resulting in the moulding that is at least in part of composite material(s).

Also described is a rotary milking platform having an annular platform floor (each bail being or to be optionally matted fully or in part) defined by an assembly, or on a rotary sub-frame in juxtaposition of moulded floor defining components, each component defining part of, or all of, a plurality of adjacent bail floors.

Preferably each moulded component is at least in part (and preferably wholly) provided with a composite material surround (eg, as if an exoskeletal surface providing surround about a filler or core providing material). Most preferably die moulding is by a process of infusion moulding with a composite system (eg, a resin system without fibre or a resin system including fibre) into cavities about one or more filler or core providing material (eg, a foam, a blow moulded foam, an expanded form or the like), optionally, but preferably, in conjunction with in mould position fibres resulting in the moulding that is at least in part of composite material(s).

Also described is a milking facility that includes a walk-on/ backoff entrance /exit arrangement to bails defined on a rotatable platform where the floor of the platform (optionally matted at least in part by different material) is moulded components in assembly or juxtaposition, whether on a rotatable sub-frame or not.

Preferably each moulded component is at least in part (and preferably wholly) provided with a composite material surround (eg, as if an exoskeletal surface providing surround about a filler or core providing material). Most preferably the moulding is by a process of infusion moulding with a composite system (eg, a resin system without fibre or a resin system including fibre) into cavities about one or more filler or core providing material (eg, a foam, a blow moulded foam, an expanded form or the like), optionally, but preferably, in conjunction with in mould position fibres resulting in the moulding that is at least in part of composite material(s).

Also described is a rotary milking platform having a plurality of supported mouldings defining at least substantially an annular floor supported by a rotatable substrate; wherein inwardly and/or outwardly there is a fringe not involving said mouldings (but which nonetheless may be an assembly or juxtapositioning of mouldings);
and wherein
(i) the, or any, inward fringe covers plant and/or (ü) provides a walkway and/or the, or any, outward fringe provides splash protection.

Also described is a moulded module able to be associated with others on a rotatable support to define a rotary milking platform, the module including for its, or each, bail floor it is to fully or in part define, a leg spreading profile (integrally defined or subsequently added).

Also described is a moulded module able to be associated with others on a rotatable support to define a rotary milking platform, the module including for its, or each, bail floor it is to fully or in part define, an udder spray site or sites.

Also described is a rotary milking facility having a rotary platform with prefabricated or moulded profiled floor segments, each segment or most segments providing multiple substantially radially aligned stall floors, and at least one zone for entering onto an aligned stall and at least one zone for exiting from an aligned stall.

Also described in combination, are moulded modules or modules as previously defined, optionally with or without any member or members of a support therefore.

Preferably said combination is part of a kit.

As used here in the term "composite material" or variations of it to a matrix or binder that binds together a reinforcement material or materials refers to materials typified by fibreglass but not restricted solely to fibreglass which incorporate a reinforcement fibre (whether as a mat or otherwise) imbedded in a surrounding matrix such as a suitable settable resin and/or polymeric material. Fibre reinforcement can be by way of long or short fibre lengths of glass fibre, plastics material fibre (e.g. KEVLAR™), carbon fibre, or the like. The sheets or mats can be chopped strand mats (CSM) or a woven fabric. Owens Corning FIBERGLAS™ sheets can be used.

Multiple mat types can be used in different layers. Preferably KEVLAR™ armours the structure under a gelcoat protected surface of the infusion moulding.

According to the invention, the composite material(s) is moulded using a resin infusion moulding process. This involves a flowable matrix or binder being infused into the mould after fibre placement therein and/or after any other embeddable material or forms is placed therein (e.g. as a filler or core).

In other forms, however, the moulding can involve a one part mould to provide the upper surface of the moulded item into which, or onto which, resin and/or polymeric matrix can be laid up in order to assume the shaped surface whilst embedding the in mould placed fibres, the underlying shape and its final finish being less important.

As used herein "resin" relates to any settable liquid or flowable matrix. Preferably it is a polymeric system.

The resin system preferably is a thermosetting unsaturated polyester system, a vinylester system or an epoxy system. Particularly preferred are a vinylester-epoxy profusion resisns. Gelcoats (e.g. as used in New Zealand marine or swimming pool applications) can be applied to exposed surfaces.

The resultant thickness of the floor is to withstand prolonged use and preferably is at least several millimetres thick with ample reinforcement embodied in the binding resin system to ensure the fibres take up all the expected tensile loads.

As used herein reference to "foamed or expanded plastics material" or "foamed or expanded polymeric material" preferably includes within its ambit any compatible singular or mix of materials that collectively provide a filler about which and at least in part into which the resin or other polymeric material can be infused to bind the reinforcing fibres suitable organic foam materials include those of polystyrene, polyurethane, polyisocyanurate and urea-formaldehyde. Other options are bound.

Preferably any foamed plastic or other material is preferably substantially rigid so as to provide little in the way of flexing under the exoskeletal moulded material eg, fibreglass. Of course other fillers including wood, or even flexible plastics materials (foamed or otherwise) can be used as the core or filling material.

Reference to a "mat or matted" surface or variation of it in conjunction with the moulded component preferably relates to a fitted, affixed and/or inlayed mat of, for example, a resilient synthetic or natural rubber (or other elastomeric material), optionally reinforced, typified, by way of example, by fibre or metal reinforced rubber belting material as used in conveyors. There is however less of an issue with the material needing to take tensile forces than is the case with a conveyor belt type material. Nevertheless the dairy usage as a mat to provide comfort for and reduce the noise by dairy cows on the platform does mean that preferably a strong material requiring infrequent replacement is utilised. Such a material as a mat protects the moulded surface that underlies the mat and which is not normally contacted by the animal's hooves.

As used herein to "bail" or "stall" should be considered as being interchangeable. Sometimes their usage refers to the area of floor required by an animal and in other uses or, as the context allows, relates to the (preferably separated) individual milking positions of the platform. The term "bail" or "stall" preferably does not include that area inwardly of where the animal is to stand, head inwards, which may be provided as a walkway to allow access about the platform to each animals head.

Reference herein to "ramps" or the like to allow ingress and/or egress from the platform does not necessarily require any inclination of the walkway. Nor does it require that the walkways be separate or singular. In some embodiments, there may be zones of bails or stalls each having their own entrance way and each having their own egress way.

It is preferred in accordance with the present invention that the animals walk head first into their bail or stall and exit by backing off the platform or at least out of the bail or stall area where they are milked to exit from the platform.

As used herein "annular", "annulus" or variations of it include a shape, when viewed in plan, that may or may not have an inner periphery or an outer periphery as a smooth curve. Whilst both are preferably substantially circular, facetted options are included.

As used herein the term "and/or" means "and" or "or", or both.

As used herein "(s)" following a noun means the plural and/or singular forms of the noun.

The term "comprising" as used in this specification means "consisting at least in part of". When interpreting statements in this specification which include that term, the features, prefaced by that term in each statement, all need to be present but other features can also be present. Related terms such as "comprise" and "comprised" are to be interpreted in the same manner.

It is intended that reference to a range of numbers disclosed herein (for example, 1 to 10) also incorporates reference to all rational numbers within that range (for example, 1, 1.1, 2, 3, 3.9, 4, 5, 6, 6.5, 7, 8, 9 and 10) and also any range of rational numbers within that range (for example, 2 to 8, 1.5 to 5.5 and 3.1 to 4.7).

Preferred forms of the present invention will now be described with reference to the accompanying drawings in which
**Figure 1** is a plan view of an annular milking platform made up by nine prefabricated and moulded components (for example each to define 6 bail areas) to provide, by way of example, a 54 bail annular platform,
**Figure 2** is a sectional view looking transverse of the radial support preferred I Beam of a platform as in Figure 1,
**Figure 3** is a radial view of a section of a platform as in Figures 1 and 2, the I Beams being shown end on or in section and showing over the left hand I Beam a mating to the sub- frame structure of adjacent moulded components,
**Figure 4** is a view in a similar direction to that of Figure 2 but rather than showing a section of the mouldings mid bail, instead showing the platform assembly at a point where a through platform port is shown and post members are supported directly or indirectly from the radial rib,
**Figure 5** shows a plan view of the radial rib of an arrangement as in Figure 4 showing plates fitted thereto which allows fitment of the moulded and other components thereto,

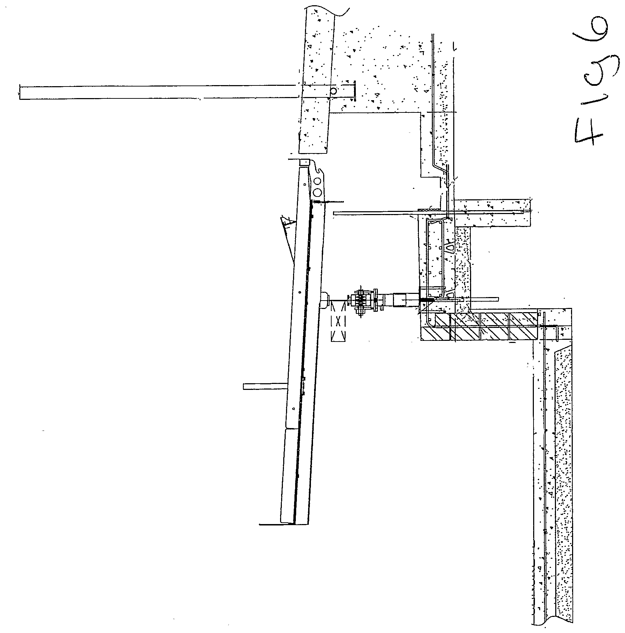

**Figure 6** is a view in elevational section of a facility showing an exterior ramp to the platform or from the platform for entrance and exiting of animals and showing the relationship of the platform to a roof support.

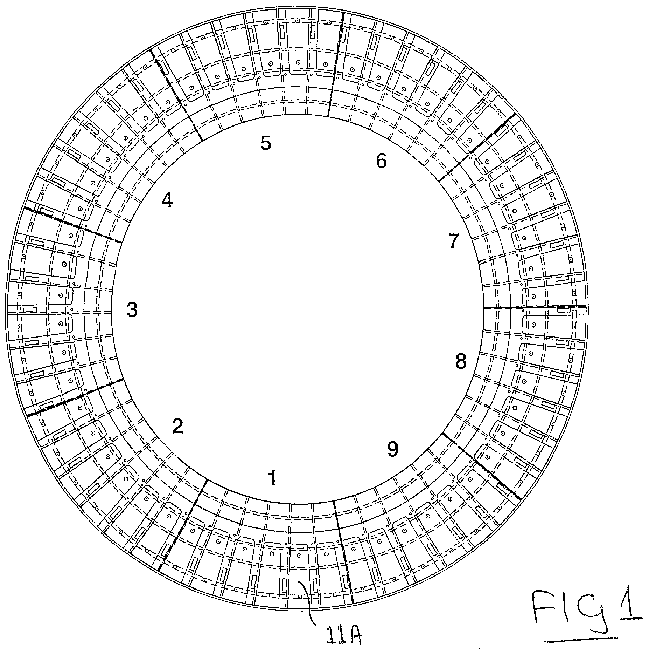

Figure 1 shows in plan an annular milking platform of 54 bails made up of modules 1 to 9 in series about the annulus. Each of the modules 1 through 9 defines 6 bails.

Other relationships between moulded modular components are nonetheless envisaged as typical examples can range from, say, 20 to 80 bails without necessarily being restricted thereto. Typical examples include as few as 26 bails. Other examples include and are not limited to 50, 54, 60, etc.

For some sizes there may be a desirability to provide two or more types of module that complement to the resulting annulus or substantially annular platform shape.

A preferred module 1 through 9 is formed by resin (e.g. vinylester-epoxy ex-Nuplex) infused moulding (e.g. fibreglass) that provides an exoskeleton and structural form about an expanded plastics foam form (or forms) previously placed in mould between glass fibre rovings, mats, textile, etc. (e.g. multiple layers of matting such as of Kevlar (ARRAMAT™), and double bias and/or biaxial glassfibre mats (e.g. Owens Corning, Dongil, or others)).

Any suitable surface coating gelcoat (e.g. Nuplex) can be used. It is envisaged that whilst each moduling to be used as a module of the annulus can be in totality a composite material such as fibreglass there is an advantage when moulding such a material, particularly when using resin infusing techniques, to preload the tooling with not only the fibre reinforcement materials for the exoskeletal areas but to lay that about a filler or core material that not only reduces the resin quantities required to infuse about the fibres but also keeps the fibres appropriately positioned for the infusion process. Suitable fillers can be any suitable material rigid or flexible. A core or filler can be of one or more parts most preferably however it is a foam plastics material such as for example foamed polyurethane or foamed polystyrene.

The use of an appropriate choice as the filler or core reduces the weight of the overall moulding. A high density polyurethane foam is preferred.

As consequence of the use of core preferably each bail floor area is underlaid by such a core of material and has by way of example fibreglass above and below of sufficient thickness and strength not withstanding a preferred provision of a depression for placement of a rubber or elastomeric mat for the animals to stand on.

Preferably shapes vary about the platform as substantially as shown in the attached drawings.

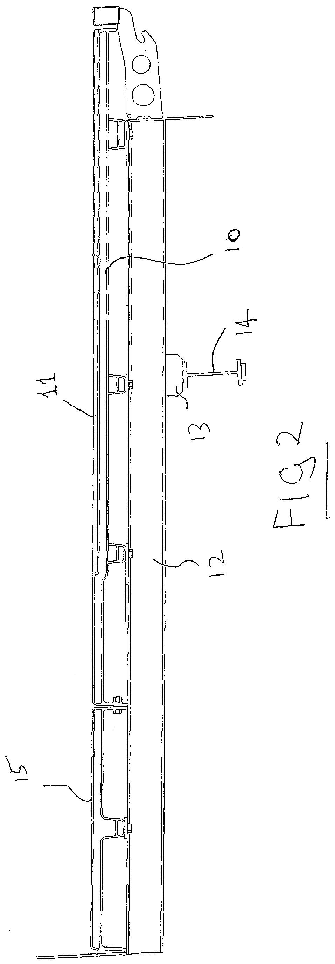

Figure 2 shows, for a typical annulus, the moulded component 10 with an upper recess 11 into which a matting material, for example reinforced natural or synthetic rubber, can be inserted. Such an arrangement is shown as 11A in Figure 1. Whilst it can be in mould affixed, preferably to allow ease of replacement it is affixed post moulding.

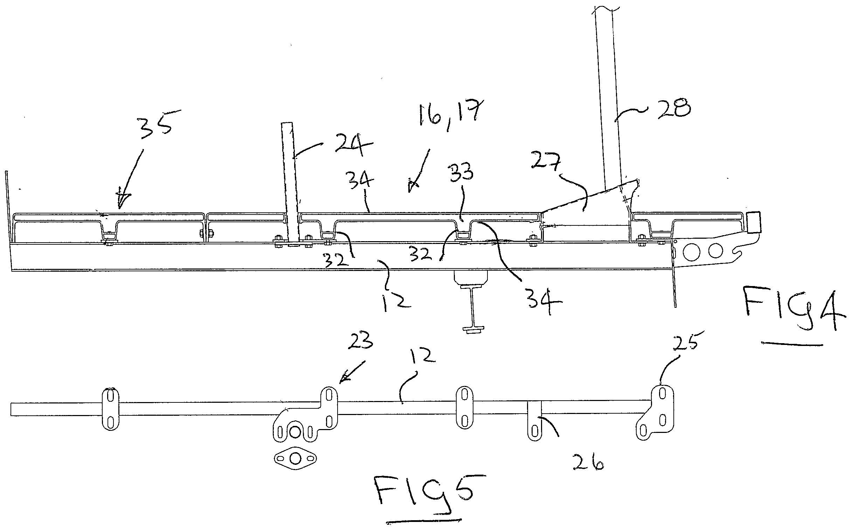

As shown in the drawings preferably each module 16 or 17 is provided with downwardly moulded ribs with in mould provided receivers for set screws to allow attachment to the substructure e.g. via flanges or brackets. These downwardly directed ribs which may include female threaded members therein as shown as 32 in figure 4.

The filler of foam plastics material is preferably that region of each module shown as 33 whilst the fibreglass is 34.

A person skilled in the art will appreciate how similar techniques can be used for the walkway providing modules 35. These modules 35 are preferably not used to extend the length of the milking position but rather to allow access to the head of the cow when in the milking condition.

A radial steel or alloy rib 12 of the sub-frame structure is preferably able to run with roller 13 on an annular rail 14 and be confined to be supported thereby in a manner typical of the platforms of Waikato Milking Systems Limited as shown on their website www.waikatomilking.co.nz or as discussed in New Zealand patent specification NZ 551609 of Rotary Platforms NZ Limited, or with pinch rollers.

Shown inwardly of the moulded member 10 is a further moulded member 15 which can be used as an internal walkway, if desired, beyond the bail floor for milking.

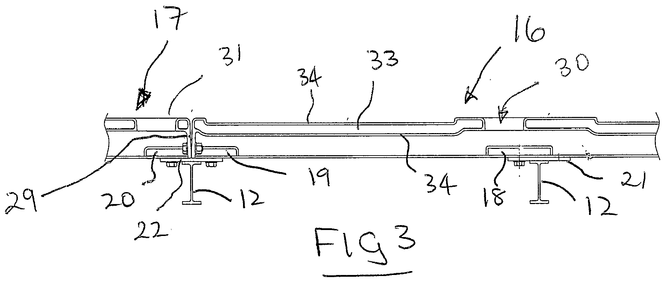

Figure 3 shows the radial ribs 12 and a first module 16 and a second proximate module 17 fitted to be supported by such a sub-frame. Shown are alloy blocks 18, 19 and 20 imbedded in the composite mouldings so as to allow fixing by bolting to flanges 21 and 22 respectively. Examples of such flanges are shown in Figure 5 with some flanges (eg, 23) being adapted to accommodate fitment of posts 24 whilst others, (eg, 25 and 26) being adapted to allow the bolting of an access port providing fitting 27 for a post 28. Such affording 27 serves much the same purpose as disclosed in aforementioned patent specification 551609 of Rotary Platforms Limited.

As can be seen in the drawings each module can have a downwardly directed flange 29 to allow bolting to a like flange of the adjacent module.

Provision can be made, for example, at 30 and 31 for post and/or post footing/port fitment.

## Claims

1. A rotary milking platform comprising a plurality of moulded and modular bail floor defining components (10) and a supporting substructure (12), wherein
each of said plurality of components is made from at least one fibre reinforced resin based composite material,
and wherein said plurality of components, having been assembled onto the substructure (12), are of sufficient thickness and strength for at least one animal to stand on;
**characterized in that** the bail floor defining components (10) are infusion moulded and pre-fabricated, and each of said plurality of components has a mould defined exoskeleton structural form formed by the composite material and moulded about an imbedded core material.

2. A platform of claim 1 wherein each of said plurality of components (10) defines at least part of the floor and/ or mat support (11) for a plurality of bails.

3. A platform of any one of the preceding claims wherein the composite material includes a layer of fibreglass (34).

4. A platform of claim 1 or 2 wherein the composite material includes a layer of Kevlar™.

5. A platform of any one of the preceding claims wherein each of said plurality of components includes an inlay comprising a foam or filler.

6. A platform of any one of the preceding claims wherein each of said plurality of components (10) is provided with an inner and outer curved or facetted periphery and with end peripheries that are substantially radially aligned with respect to the axis of rotation of the to be defined rotary milking platform.

7. A platform of any of claims 1 to 6 wherein each of said plurality of components (10) are each at least in part matted with a resilient material.

8. A platform of any of claims 1 to 7 wherein each of said plurality of components has a gelcoat protected upper surface that in use an animal can walk on.

9. A platform of any of the preceding claims
wherein inwardly and/or outwardly of said plurality of components (10) as arranged on the substructure (12), there is a fringe not involving said components; said fringe comprising an assembly or juxtapositioning of further mouldings.

10. A platform according to any one of the preceding claims, wherein each component (10) has been formed by resin infused moulding about an expanded plastics foam form (33), or forms, previously placed in a mould between glass fibre rovings, mats, textile, Kevlar, double bias glassfibre and/ or biaxial glassfibre mats.

11. A platform according to claim 10, wherein the resin infused moulding comprises fibreglass (34) moulding.

12. A platform of claim 1, wherein
• each of said plurality of components (10) defines at least part of the floor (11) for a plurality of bails;
• the composite material includes a layer of fibreglass (34);
• each of said plurality of components includes an inlay comprising a foam;
• each of said plurality of components (10) is provided with an inner and outer curved or facetted periphery and with end peripheries that are substantially radially aligned with respect to the axis of rotation of the to be defined rotary milking platform;
• each of said plurality of components (10) are each at least in part matted with a resilient material; and
• each of said plurality of components has a gelcoat protected upper surface that in use an animal can walk on.

## Patentansprüche

1. Rotierende Melkplattform, umfassend eine Vielzahl von geformten und modularen Schwingboden-definierenden Komponenten (10) und einen tragenden Unterbau (12), wobei
jede der Vielzahl von Komponenten aus mindestens einem faserverstärkten harzbasierten Verbundwerkstoff hergestellt ist,
und wobei die Vielzahl von Komponenten, nachdem sie auf dem Unterbau (12) zusammengebaut wurden, von ausreichender Dicke und Festigkeit zum Stehen von mindestens einem Tier darauf sind;
**dadurch gekennzeichnet, dass** die Schwingboden-definierenden Komponenten (10) durch Infusion geformt und vorgefertigt sind, und jede der Vielzahl von Komponenten eine durch die Form definierte Exoskelett-Strukturform aufweist, die durch den Verbundwerkstoff gebildet und um ein eingebettetes Kernmaterial herum geformt ist.

2. Plattform nach Anspruch 1, wobei jede der Vielzahl von Komponenten (10) zumindest eines des Bodens und/oder der Mattenauflage (11) für eine Vielzahl von Bügeln definiert.

3. Plattform nach einem der vorangehenden Ansprüche, wobei der Verbundwerkstoff eine Schicht aus Glasfaser (34) einschließt.

4. Plattform nach Anspruch 1 oder 2, wobei der Verbundwerkstoff eine Schicht aus Kevlar™ einschließt.

5. Plattform nach einem der vorangehenden Ansprüche, wobei jede der mehreren Komponenten eine Einlage umfasst, die einen Schaum oder Füllstoff umfasst.

6. Plattform nach einem der vorangehenden Ansprüche, wobei jede der mehreren Komponenten (10) mit einem inneren und äußeren gekrümmten oder facettierten Randbereich und mit Endrandbereichen bereitgestellt ist, die im Wesentlichen radial in Bezug auf die Rotationsachse der zu definierenden rotierenden Melkplattform ausgerichtet sind.

7. Plattform nach einem der Ansprüche 1 bis 6, wobei jede der Vielzahl von Komponenten (10) jeweils zumindest teilweise mit einem elastischen Material mattiert ist.

8. Plattform nach einem der Ansprüche 1 bis 7, wobei jede der Vielzahl von Komponenten eine durch Gelüberzug geschützte obere Fläche aufweist, auf der bei Gebrauch ein Tier laufen kann.

9. Plattform nach einem der vorangehenden Ansprüche, wobei nach innen und/oder nach außen von der Vielzahl von Komponenten (10), wie sie auf dem Unterbau (12) angeordnet sind, eine Umrandung vorhanden ist, der die Komponenten nicht einschließt; wobei die Umrandung eine Anordnung oder Aneinanderreihung von weiterer Formteilen umfasst.

10. Plattform nach einem der vorangehenden Ansprüche, wobei jede Komponente (10) durch harzinfundiertes Gießen um eine Form (33) aus expandiertem Kunststoffschaum geformt wurde, oder Formen, die zuvor in einer Form zwischen Glasfaserrovings, Matten, Textil-, Kevlar-, doppelbiaxialen Glasfaser- und/oder biaxialen Glasfasermatten angeordnet wurden.

11. Plattform nach Anspruch 10, wobei das harzinfundierte Formteil ein Formteil aus Glasfaser (34) umfasst.

12. Plattform nach Anspruch 1, wobei
- jede der Vielzahl von Komponenten (10) zumindest einen Teil des Bodens (11) für eine Vielzahl von Bügeln definiert;
- der Verbundwerkstoff eine Schicht aus Glasfaser (34) einschließt;
- jede der Vielzahl von Komponenten eine Einlage umfasst, die einen Schaumstoff umfasst;
- jede der Vielzahl von Komponenten (10) mit einem inneren und äußeren gekrümmten oder facettierten Randbereich und mit Endrandbereichen bereitgestellt ist, die im Wesentlichen radial in Bezug auf die Rotationsachse der zu definierenden rotierenden Melkplattform ausgerichtet sind;
- jede der Vielzahl von Komponenten (10) zumindest teilweise mit einem elastischen Material mattiert ist; und
- jede der Vielzahl von Komponenten eine durch Gelüberzug geschützte Oberseite aufweist, auf der ein Tier im Gebrauch laufen kann.

## Revendications

1. Plate-forme de traite rotative comprenant une pluralité de composants moulés et modulaires définissant un plancher de lieu de traite (10) et une sous-structure de support (12), dans laquelle
chacun de ladite pluralité de composants est constitué d'au moins un matériau composite à base de résine renforcée de fibres,
et dans laquelle ladite pluralité de composants, ayant été assemblés sur la sous-structure (12), ont une épaisseur et une résistance suffisantes pour qu'au moins un animal puisse se tenir debout ;
**caractérisée en ce que** les composants définissant le plancher de lieu de traite (10) sont moulés par infusion et préfabriqués, et chacun de ladite pluralité de composants a une forme structurelle d'exosquelette définie par moule formée par le matériau composite et moulée autour d'un matériau central incorporé.

2. Plate-forme de la revendication 1, dans laquelle chacun de ladite pluralité de composants (10) définit au moins une partie du support de plancher et/ou de natte (11) pour une pluralité de lieux de traite.

3. Plate-forme de l'une quelconque des revendications précédentes, dans laquelle le matériau composite comporte une couche de fibres de verre (34).

4. Plate-forme de la revendication 1 ou 2, dans laquelle le matériau composite comporte une couche de Kevlar™.

5. Plate-forme de l'une quelconque des revendications précédentes, dans laquelle chacun de ladite pluralité de composants comporte une incrustation comprenant une mousse ou une charge.

6. Plate-forme de l'une quelconque des revendications précédentes, dans laquelle chacun de ladite pluralité de composants (10) est pourvu d'une périphérie interne et externe incurvée ou facettée et de périphéries d'extrémité qui sont sensiblement radialement alignées par rapport à l'axe de rotation de la plate-forme de traite rotative à définir.

7. Plate-forme de l'une des revendications 1 à 6, dans laquelle chacun de ladite pluralité de composants (10) est au moins en partie recouvert d'un matériau élastique.

8. Plate-forme de l'une des revendications 1 à 7, dans laquelle chacun de ladite pluralité de composants a une surface supérieure protégée par un enduit gélifié sur laquelle, en cours d'utilisation, un animal peut marcher.

9. Plateforme de l'une des revendications précédentes dans laquelle, vers l'intérieur et/ou vers l'extérieur de ladite pluralité de composants (10) tels qu'agencés sur la sous-structure (12), il y a une bordure n'impliquant pas lesdits composants ; ladite bordure comprenant un ensemble ou une juxtaposition d'autres pièces moulées.

10. Plate-forme selon l'une quelconque des revendications précédentes, dans laquelle chaque composant (10) a été formé par moulage par infusion de résine autour d'un coffrage (33), ou de coffrages, en mousse de plastique expansé préalablement placé(s) dans un moule entre des mèches de fibre de verre, des nattes, du textile, du Kevlar, des nattes en fibres de verre double biais et/ou en fibres de verre biaxiales.

11. Plate-forme selon la revendication 10, dans laquelle le moulage par infusion de résine comprend un moulage de fibres de verre (34).

12. Plateforme de la revendication 1, dans laquelle
• chacun de ladite pluralité de composants (10) définit au moins une partie du plancher (11) pour une pluralité de lieux de traite ;
• le matériau composite comporte une couche de fibres de verre (34) ;
• chacun de ladite pluralité de composants comporte une incrustation comprenant une mousse ;
• chacun de ladite pluralité de composants (10) est pourvu d'une périphérie interne et externe incurvée ou facettée et de périphéries d'extrémité qui sont sensiblement radialement alignées par rapport à l'axe de rotation de la plate-forme de traite rotative à définir ;
• chacun de ladite pluralité de composants (10) est au moins en partie recouvert d'un matériau élastique ; et
• chacun de ladite pluralité de composants a une surface supérieure protégée par un enduit gélifié sur laquelle, en cours d'utilisation, un animal peut marcher.
